(19) Europäisches Patentamt
European Patent Office
Office européen des brevets

(11) EP 4 116 366 A1

(12) **EUROPEAN PATENT APPLICATION**

(43) Date of publication:
**11.01.2023 Bulletin 2023/02**

(21) Application number: **21184114.3**

(22) Date of filing: **06.07.2021**

(51) International Patent Classification (IPC):
***C08K 3/22*** *(2006.01)* ***C08K 3/30*** *(2006.01)*
***C08L 83/10*** *(2006.01)* ***C08L 67/08*** *(2006.01)*
***C08L 67/02*** *(2006.01)* *C08G 63/672 (2006.01)*
*C08G 77/445 (2006.01)* *C08G 63/695 (2006.01)*
*C08G 63/91 (2006.01)* *C08G 63/48 (2006.01)*
*C08G 63/183 (2006.01)* *C08J 11/24 (2006.01)*
*C08J 11/10 (2006.01)* *C08G 65/332 (2006.01)*

(52) Cooperative Patent Classification (CPC):
(C-Sets available)
**C08K 3/30;** C08G 63/183; C08G 63/48; C08G 63/672; C08G 63/6956; C08G 63/916; C08G 65/3326; C08G 77/445; C08K 2003/2241; C08K 2003/3036 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **VOLLENBERG, Peter**
  **Selkirk, 12158 (US)**
- **DASH, Ranjan**
  **Exton, 19341 (US)**
- **SWAMINATHAN, Shubashree**
  **562125 Bangalore (IN)**

(74) Representative: **Dehns**
**St. Bride's House**
**10 Salisbury Square**
**London EC4Y 8JD (GB)**

(54) **SUSTAINABLE COPOLYESTER ELASTOMER COMPOSITIONS WITH IMPROVED COLOR CAPABILITY**

(57) Thermoplastic compositions include: a copolyester elastomer including a polybutylene terephthalate (PBT) moiety and an elastomer moiety; and from greater than 0.1 wt% to 9 wt% of at least one brightening agent. The PBT moiety includes PBT derived from post-consumer, pre-consumer or post-industrial recycled (PCR) polyethylene terephthalate (PET), and the thermoplastic composition has an L* color value of at least 80 as determined according to a CIELab color space standard. Methods for forming the copolymer elastomer and compositions including it are also described.

EP 4 116 366 A1

(52) Cooperative Patent Classification (CPC): (Cont.)

C-Sets
**C08K 3/22, C08L 67/025;**
**C08K 3/22, C08L 67/08;**
**C08K 3/22, C08L 83/10;**
**C08K 3/30, C08L 67/025;**
**C08K 3/30, C08L 67/08;**
**C08K 3/30, C08L 83/10**

## Description

### FIELD OF THE DISCLOSURE

The present disclosure relates to copolyester elastomers including a polybutylene terephthalate (PBT) moiety and an elastomer moiety in which the PBT is derived from post-consumer, pre-consumer or post-industrial recycled (PCR) polyethylene terephthalate (PET).

### BACKGROUND OF THE DISCLOSURE

For an injection molding material to be suitable for consumer-centric applications like personal electronics it must meet a large number of requirements. In certain aspects it is desirable for the material to have a bright white color. Color is typically not a problem for petrochemical-based products (also referred to as "virgin" materials), but it has been shown to become an issue when the products contain post-consumer or post-industrial recycle (PCR)-based components. As consumer electronics markets move in the direction of "sustainable materials" having a high PCR-content, the inability of thermoplastics including high PCR content to have a bright white color is becoming particularly acute.

These and other shortcomings are addressed by aspects of the present disclosure.

### SUMMARY

Aspects of the disclosure relate to thermoplastic compositions including: a copolyester elastomer including a polybutylene terephthalate (PBT) moiety and an elastomer moiety; and from greater than 0.1 wt% to 9 wt% of at least one brightening agent. The PBT moiety includes PBT derived from post-consumer, pre-consumer or post-industrial recycled (PCR) polyethylene terephthalate (PET), and the thermoplastic composition has an L* color value of at least 80 as determined according to a CIELab color space standard.

Aspects of the disclosure further relate to methods for forming a copolyester elastomer, including: (1) forming a PBT moiety from a high purity terephthalic moiety; and (2) polymerizing the PBT moiety with an elastomer moiety to form the copolyester elastomer. The high purity terephthalic moiety is derived from post-consumer, pre-consumer or post-industrial recycled (PCR) polyethylene terephthalate (PET).

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 is a chemical reaction scheme for an exemplary process for forming a copolyester elastomer (thermoplastic polyether-ester, TPEE) according to an aspect of the disclosure.

### DETAILED DESCRIPTION

According to aspects of the disclosure, post-consumer, pre-consumer or post-industrial recycle (PCR) based components are "up-cycled" to form copolyester elastomers (e.g. TPEE), and in particular polybutylene terephthalate (PBT) - polytetrahydrofuran (pTHF) based elastomers. The term "up-cycled" refers to a process where PCR polyethylene terephthalate (PET) is chemically brought back to monomers such as one or more of the terephthalate containing monomers Bis(2-HydroxyEthyl) Terephthalate (BHET), Dimethyl Terephthalate (DMT), Terephthalic Acid (TPA). Ethylene glycol (EG) may also be formed. Subsequently the BHET, DMT or TPA is polymerized with Butane Diol (BDO) and an elastomer moiety (e.g., pTHF) to create the TPEE. The up-cycled copolyester elastomer materials and compositions including it are able to achieve bright white colors (e.g., L* of at least 80 and even higher). An exemplary chemical reaction scheme for a process for forming a copolyester elastomer (thermoplastic polyether-ester, TPEE) according to aspects of the disclosure is provided in FIG. 1.

In specific aspects present disclosure includes thermoplastic compositions including a copolyester elastomer including a polybutylene terephthalate (PBT) moiety and an elastomer moiety; and from greater than 0.1 wt% to 9 wt% of at least one brightening agent. The PBT moiety includes PBT derived from post-consumer, pre-consumer or post-industrial recycled (PCR) polyethylene terephthalate (PET). The thermoplastic composition has an L* color value of at least 80 as determined according to a CIELab (International Commission on Illumination) color space standard.

Before the present compounds, compositions, articles, systems, devices, and/or methods are disclosed and described, it is to be understood that they are not limited to specific synthetic methods unless otherwise specified, or to

particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

## Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "an elastomer moiety" includes copolymers including two or more elastomer moieties.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the

compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Copolyester elastomers, sometimes referred to as TPEE (thermoplastic polyether-ester elastomers), are a special class of elastomeric material. These materials exhibit thermoplastic processability on conventional molding equipment and exhibit the elasticity and resistance to impact and flex-fatigue of conventional cured rubbers. The combination of properties is obtained due to the result of the phase separation between the amorphous polyether segments and the crystalline polyester segments of the copolymer molecule. Because the immiscible segments are copolymerized into a single macromolecular backbone the necessary phase separation that occurs results in discrete domains with dimensions on the order of magnitude of the polymer chain. Thus, the polyether forms soft, amorphous domains that are physically crosslinked by the 'knots' of crystalline, polyester, domains. That is, the amorphous soft blocks provide the elastomeric properties of flexibility and low temperature impact while the presence of the crystalline hard block results in discrete melting points, heat and chemical resistance, and mechanical strength. These materials are also commonly characterized by lower temperature brittleness point than conventional rubbers, resilience, low creep, and very good resistance to oils, fuels, solvents and chemicals.

In some aspects the disclosure relates to thermoplastic compositions including: a copolyester elastomer including a polybutylene terephthalate (PBT) moiety and an elastomer moiety; and from greater than 0.1 wt% to 9 wt% of at least one brightening agent. The PBT moiety includes PBT derived from post-consumer, pre-consumer or post-industrial recycled (PCR) polyethylene terephthalate (PET). The thermoplastic composition has an L* color value of at least 80 as determined according to a CIELab (International Commission on Illumination) color space standard.

In certain aspects the thermoplastic composition has an L* color value of at least 90, or an L* color value of at least 92, or an L* color value of at least 94, as determined according to a CIELab color space standard.

In other aspects the PBT moiety is derived from PCR PET by (1) depolymerizing PCR PET to form a high purity terephthalic moiety including one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety. In a particular aspects the PBT moiety is derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT.

The BDO may be derived from a petrochemical or a bio-based source. The elastomer may be derived from a petrochemical or a bio-based source. In a specific aspect the elastomer moiety is not derived from recycled content. In contrast to recycled PET derived terephthalate moieties which include residual colorants and impurities, bio-based BDO and elastomer moieties (e.g., polytetrahydrofuran (pTHF)) do not include such residual colorants and impurities. Accordingly, it is believed that no effect on color would be observed when switching between petrochemical-derived BDO and elastomer moieties (e.g., pTHF) and their bio-based counterparts.

In some aspects the high purity terephthalic moiety or the high purity BHET monomer has a purity of at least about 95%. In further aspects the high purity terephthalic moiety or the high purity BHET monomer has a purity of at least about 99%, or at least about 99.5%.

The elastomer moiety may include, but is not limited to, a polyalkylene oxide, a siloxane having a block length of from D5 to D400, a long chain fatty acid, or a combination thereof. In further aspects the siloxane has a block length of from D5 to D200, or from D5 to D100, or about D45. The long chain fatty acid may in some aspects have a chain length of at least 6, or a chain length of at least 10. An exemplary long chain fatty acid suitable for aspects of the disclosure is sebacic acid. The polyalkylene oxide may include, but is not limited to, polyethylene oxide, polypropylene oxide, polybutylene oxide, and combinations thereof. The amounts will vary, depending on the process conditions, customer needs, and the like. In a particular aspect the elastomer moiety includes a polyalkylene oxide including polytetrahydrofuran (pTHF).

The at least one brightening agent may include, but is not limited to, titanium dioxide ($TiO_2$), zinc sulfide (ZnS), or a combination thereof. In certain aspects the composition includes from about 2 wt% to about 9 wt% of the at least one brightening agent, or from about 2 wt% to about 8 wt%, or about 2 wt% to about 7 wt%, or about 2 wt% to about 5 wt%, of the at least one brightening agent.

In some aspects the composition further includes at least one additional component including an additional thermoplastic polymer, a filler, an impact modifier, a pigment, a whitening agent, a surfactant, a processing aid, a thermal stabilizer, a flame retardant, a photochemical stabilizer or a combination thereof.

Aspects of the disclosure further relate to methods for forming a copolyester elastomer, including: (1) forming a PBT moiety from a high purity terephthalic moiety; and (2) polymerizing the PBT moiety with an elastomer moiety to form the copolyester elastomer. The high purity terephthalic moiety is derived from post-consumer, pre-consumer or post-industrial recycled (PCR) polyethylene terephthalate (PET).

The step of forming the PBT moiety from a high purity terephthalic moiety may include (1) depolymerizing PCR PET to form a high purity terephthalic moiety including one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety.

The PBT moiety may be derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT. The BDO may be derived from a petrochemical or a bio-based source.

The method may further include combining the copolyester elastomer with at least one brightening agent to form a thermoplastic composition. The at least one brightening agent may include titanium dioxide ($TiO_2$), zinc sulfide (ZnS), or a combination thereof. The composition may include from about 2 wt% to about 9 wt%, or from about 2 wt% to about 8 wt%, or from about 2 wt% to about 7 wt%, or from about 2 wt% to about 5 wt%, of the at least one brightening agent.

The composition formed from the method may have L* color value of at least 80, or at least 90, or at least 92, or at least 94, as determined according to a CIELab color space standard.

In one aspect, the disclosure relates to a copolyester elastomer including:

(a) long-chain ester units having the formula:

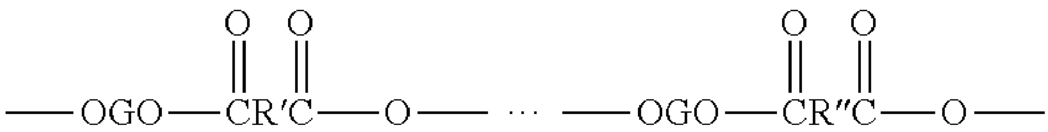

such that G is the divalent polyalkylene oxide radical remaining after removal of the terminal hydroxyl groups from a poly(alkylene oxide) glycol having a number-average molecular weight of 200 to 5000, as measured by vapor pressure osmometry or nuclear magnetic spectroscopy; and R' is the divalent terephthalic radical remaining after removal of the carboxyl groups from a terephthalic dicarboxylic acid; and R" is a divalent isophthalic radical remaining after removal of the carboxyl groups from an isophthalic dicarboxylic acid; and

(b) short-chain ester units having units of the formula:

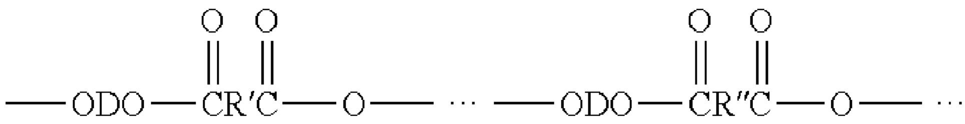

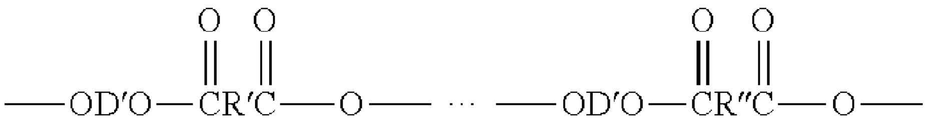

such that D is the divalent alkylene radical, selected from the group consisting of linear aliphatic radicals remaining after removal of the hydroxyl groups from aliphatic diols having a molecular weight ranging from 40 to 250; and R' and R" are as defined above; and D' is the divalent ethylene radical after removal of the hydroxyl groups of ethylene glycol.

The amounts of the short-chain ester units and the long-chain ester units and the amounts of the various groups can vary. For instance, the short-chain ester units can constitute from 20% to 95% by weight of the copolyester elastomer, and the long-chain ester units constitute from 5% to 80%, by weight of the copolyester elastomer. In one aspect, D is present at 98 mol %, based on the total number of D and D' units.

The aliphatic radicals vary, pending on the application. Examples of suitable aliphatic radicals can be selected from the following: ethylene radicals, butylene radicals, trimethylene radicals, pentalene radicals, hexylene radicals, cyclohexylene radicals, and combinations thereof.

The disclosure provides copolyester elastomers having specific useful relationships among the isophthalic groups, ethylene glycol groups, and the components of the copolyester elastomer. The disclosure provides aspects in which the divalent alkylene radicals D and D' are in certain relationships with the divalent polyalkylene oxide radical G. In one aspect, the divalent alkylene radical D and the divalent polyalkylene oxide radical G are at a weight ratio ranging from 95:5 to 20:80. In another aspect, the divalent alkylene radical D' and the divalent polyalkylene oxide radical G are at a weight ratio ranging from 95:5 to 20:80.

The copolyester elastomers of the disclosure impart physical properties that are useful in various applications. For instance, the intrinsic viscosity (IV) of the compositions can be at least 3. In one aspect, the IV can range from 0.3 to 3.

The melting temperature of the copolyester elastomer of the disclosure is generally at least 120° C. In one aspect, the melting temperature ranges from 120 to 225 °C. The tensile elongation at break (%) imparted by a copolyester

elastomer is generally at least 50%. In another aspect, the tensile elongation at break (%) ranges from 50% to 700%. In one aspect, the tensile elongation at break (%) ranges from 350% to 600%.

The molecular weight of the copolyester elastomer can also vary. In one aspect, the molecular weight is at least 10,000. In another aspect, the molecular weight can range from 10,000 to 800,000. The glass transition temperature of the amorphous polyether soft segments ranges from -100 °C to 50 °C. In one aspect, the glass transition temperature ranges from -60 to 10 °C.

A copolyester elastomer composition of the disclosure is generally made by a process that involves: (a) reacting (i) a terephthalate moiety with (ii) a diol, and (iii) a polyalkylene oxide at a pressure that is at least atmospheric pressure in the presence of a catalyst component at a temperature ranging from 180 to 230 °C. The process is practiced under an inert atmosphere under conditions that depolymerizes the terephthalate moiety into a molten mixture containing oligomers, polyalkylene oxide, alkylene diol, and ethylene glycol. The terephthalate moiety and the diol are combined in the liquid phase under agitation and alkylene diol is refluxed back into a reactor during step (a).

The process further involves the step of subjecting the molten mixture to subatmospheric pressure and increasing the temperature of the molten mixture to a temperature ranging from 230 to 260 °C, and thereby forming a copolyester elastomer.

The copolyester elastomer resin can include:

(a) long-chain ester units having the formula:

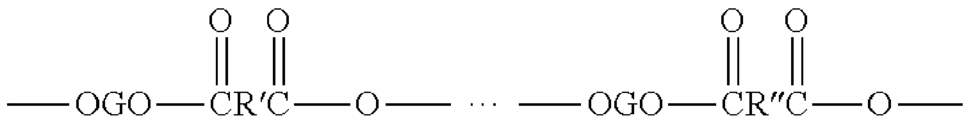

wherein G is the divalent polyalkylene oxide radical remaining after removal of the terminal hydroxyl groups from a poly(alkylene oxide) glycol having a number-average molecular weight of 200 to 5000, as measured by vapor pressure osmometry or nuclear magnetic spectroscopy; and R' is the divalent terephthalic radical remaining after removal of the carboxyl groups from a terephthalic dicarboxylic acid; and where R" is a divalent isophthalic radical remaining after removal of the carboxyl groups from an isophthalic dicarboxylic acid; and

(b) short-chain ester units having units of the formula:

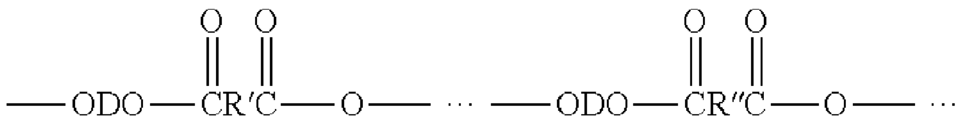

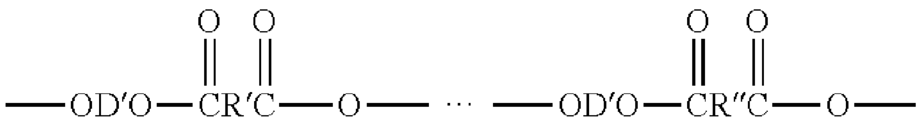

where D is the divalent alkylene radical, selected from the group consisting of linear aliphatic radicals remaining after removal of the hydroxyl groups from aliphatic diols having a molecular weight of less than 250; and R' and R" are as defined above; and where D' is the divalent ethylene radical after removal of the hydroxyl groups of ethylene glycol; and where excess diol, ethylene glycol, and THF are removed during step (b) and wherein step (b) is carried out under agitation.

The diol (D) used generally has a boiling point that is higher than the boiling point of ethylene glycol at atmospheric pressure. The diol can be selected from the group consisting of propane diol, 1,4 butanediol, cyclohexyldimethanol, pentane diol, hexane diol, isomers of the foregoing, and ethylene glycol, and combinations thereof. In one aspect, however, the diol is ethylene glycol.

The polyalkylene oxide can be selected from the following materials: polyethylene oxide, polypropylene oxide, polyalkylene oxide, and combinations thereof.

Both steps of the process can be carried out in the same reactor. In one aspect, however, the process is carried out in two separate reactors, where step (a) is carried out in a first reactor and when the molten mixture has formed, the molten mixture is placed in a second reactor and step (b) is carried out. In another aspect, the process can be carried out in more than two reactors. In another aspect, the process can be carried out in a continuous series of reactors. Advantageously, the process can be carried out without isolation and dissolution of a material from the molten mixture.

The catalyst component is generally selected from group of antimony compounds, tin compounds, titanium compounds, and combinations thereof. Of course, functionally equivalent materials can be used. The amounts of the catalyst can vary. In one aspect, the catalyst is used in an amount ranging from 10 to 5000 ppm.

When 1,4 butanediol is used, the disclosure provides specific aspects that help make the process perform effectively. For instance, when the diol is 1,4-butanediol, the process includes a condition in which 1,4-butanediol, ethylene glycol, and water are recirculated, and tetrahydrofuran is distilled during step (a) of the process.

When the diol used is 1,4-butanediol, the disclosure includes a step that reduces the amount of THF produced during the process by adding a basic compound containing an alkali metal to a reactor in step (a) and thereby reducing formation of THF. Such a compound can be selected from the following compounds: sodium alkoxides, sodium hydroxide, sodium acetate, sodium carbonate, sodium bicarbonates, potassium alkoxides, potassium hydroxide, potassium acetate, potassium carbonate, potassium bicarbonate lithium alkoxides, lithium hydroxide, lithium acetate, lithium carbonate, lithium bicarbonate, calcium alkoxides, calcium hydroxide, calcium acetate, calcium carbonate, calcium bicarbonates, magnesium alkoxides, magnesium hydroxide, magnesium acetate, magnesium carbonate, magnesium bicarbonates, aluminum alkoxides, aluminum hydroxide, aluminum acetate, aluminum carbonate, aluminum bicarbonates, and combinations thereof.

The basic compound can be added to a reactor at an amount ranging from 0.1 ppm to 50 ppm and the THF total amount is reduced at least 10%, as compared to a process that does not utilize the basic compound.

The duration of the process can vary, depending on the application and the needs. In one aspect, step (a) is carried out from two to 5 hours. In another aspect, can be carried out from 2 to 10 hours, or more.

The process may contain an additional step in which the copolyester elastomer formed from the molten mixture is subjected to solid-state polymerization. Solid-state polymerization generally involves subjecting the copolyester elastomer formed from the molten mixture to an inert atmosphere and heating to a temperature for a sufficient period of time to build the molecular weight of the copolyester elastomer. Generally, the temperature to which the copolyester elastomer is heated is below the melting point of the copolyester elastomer, e.g., from 5 to 60 °C. below the melting point of the copolyester elastomer. In one aspect, such a temperature may range from 150 to 210 °C. Suitable periods of time during which the solid-state polymerization occurs may range from 2 to 20 hours, or longer, depending on the conditions and equipment. The solid-state polymerization is generally carried out under tumultuous conditions sufficient to promote further polymerization of the copolyester elastomer to a suitable molecular weight. Such tumultuous conditions may be created by subjecting the copolyester elastomer to tumbling, the pumping of inert gas into the system to promote fluidization of polymer particle, e.g., pellets, chips, flakes, powder, and the like. The solid-state polymerization can be carried out at atmospheric pressure and/or under reduced pressure, e.g. from 1 atmosphere to 1 mbar.

The copolyester elastomer can contain additional materials, depending on factors such as the preparation process. For instance, in one aspect, the further includes a catalyst selected from the group consisting of tin, antimony, titanium catalysts, and combinations thereof.

In one aspect, the composition is used with stabilizers. Suitable stabilizers include hindered phenols. Examples of such suitable stabilizers include 1,3,5-trimethyl-2,4,6-tris(3,5-di-t-butyl-4-hydroxybenzyl)benzene sold under the trademark IRGANOX™ 1330 by CIBA, or ETHANOX™ 330.

In some aspects the 1,4-butanediol, polyalkylene oxide, and combinations thereof are derived from biomass, e.g., a cellulosic material or a grain such as corn or wheat. More particularly, 1,4-butanediol, polybutylene oxide, and combinations can be derived from 1,4 butane dicarboxylic acid that is derived from biomass.

The term "biomass" means living or dead biological matter that can be directly or subsequently converted to useful chemical substances that are ordinarily derived from non-renewable hydrocarbon sources. Biomass can include cellulosic materials, grains, starches derived from grains, fatty acids, plant based oils, as well as derivatives from these biomass examples. Examples of useful chemical substances include and are not limited to diols; diacids; monomers used to make diols or acids, e.g., succinic acid; monomers used to make polymers; and the like. Biomass based butanediol can be obtained from several sources. For instance, the following process can be used to obtain biomass-based 1,4-butanediol. Agriculture based biomass, such as corn, can be converted into succinic acid by a fermentation process that also consumes carbon dioxide. Such succinic acid is commercially available from several sources such as from Diversified Natural Products Inc. under the trade name "BioAmber™". This succinic acid can be easily converted into 1,4-butanediol by processes described in several published documents such as in U.S. Pat. No. 4,096,156, incorporated herein in its entirety. Bio-mass derived-1,4-butanediol can also be converted to tetrahydrofuran, and further converted to polytetrahydrofuran, also known as polybutylene oxide glycol. Another process that describes converting succinic acid into 1,4-butanediol is described in Life Cycles Engineering Guidelines, by Smith et al., as described in EPA publication EPA/600/R-1/101 (2001).

The polyalkylene oxide can be added at different stages. In one aspect, the polyalkylene oxide is added during the depolymerization of the terephthalate moiety. In another aspect, the polyalkylene oxide is added during the agitation of the first molten mixture. In another aspect, the polyalkylene oxide is added during the agitation of the second molten mixture. The amounts of the polyalkylene oxide can vary. In one aspect, the polyalkylene oxide is present in an amount

ranging from 5 to 80 wt % polyalkylene oxide, based on 100 wt % of total composition of the copolyester elastomer.

The member selected from the group consisting of 1,4-butanediol, polyalkylene oxide, and combinations thereof can be derived from biomass.

The polyalkylene oxide can be selected from the group consisting of polyethylene oxide, polypropylene oxide, polybutylene oxide, and combinations thereof. The amounts will vary, depending on the process conditions, customer needs, and the like.

As such, the disclosure provides a flexible system that enables the production of various copolyester elastomers having highly useful properties. When the diol selected is ethylene glycol, for instance, the disclosure includes a copolyester elastomer resin that includes the following formula:

(a) long-chain ester units having the formula:

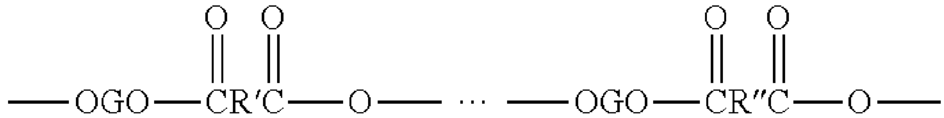

wherein G is the divalent polyalkylene oxide radical remaining after removal of the terminal hydroxyl groups from a poly(alkylene oxide) glycol having a number-average molecular weight of 200 to 5000; and R' is the divalent terephthalic radical remaining after removal of the carboxyl groups from a terephthalic dicarboxylic acid; and R" is a divalent isophthalic radical remaining after removal of the carboxyl groups from an isophthalic dicarboxylic acid; and
(b) short-chain ester units having the units

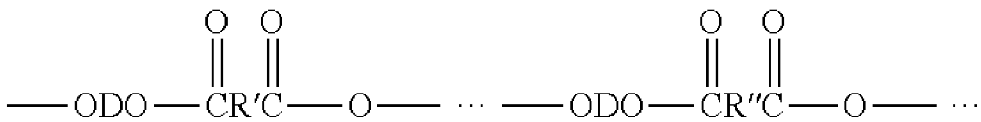

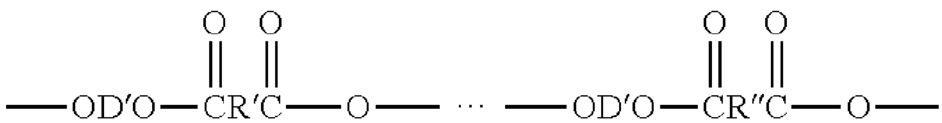

wherein D is the divalent butylene radical remaining after removal of the hydroxyl groups from butanediol having a molecular weight of less than 250, and D' is the divalent ethylene radical remaining after removal of the hydroxyl groups from ethylene glycol and R' and R" are as defined above.

When 1,4,-butanediol is selected, the disclosure offers a copolyester elastomer resin that includes:

(a) a long chain ester having the formula:

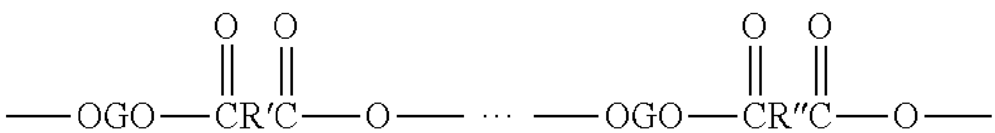

wherein G is the divalent polyalkylene oxide radical remaining after removal of the terminal hydroxyl groups from a poly(alkylene oxide) glycol having a number-average molecular weight of 200 to 5000; and R' is the divalent terephthalic radical remaining after removal of the carboxyl groups from a terephthalic dicarboxylic acid; and R" is a divalent isophthalic radical remaining after removal of the carboxyl groups from an isophthalic dicarboxylic acid; and
(b) short-chain ester units having the formula:

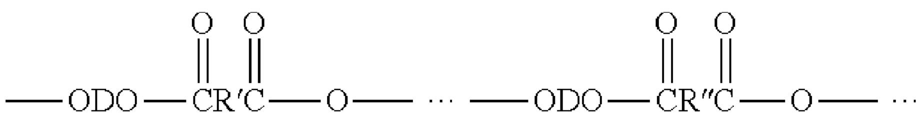

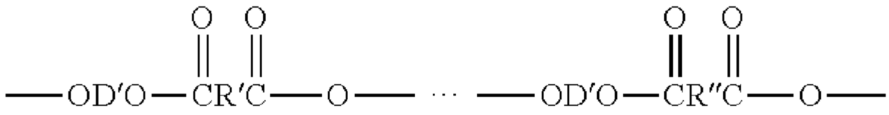

wherein D is the divalent butylene radical remaining after removal of the hydroxyl groups from butanediol having a molecular weight of less than 250; and R' and R" are as defined above; and wherein D' is a divalent ethylene radical after removal of hydroxyl groups of ethylene glycol.

Articles can be made from the copolyester elastomers by molding or extrusion processes that are well known in the art. As such, in one aspect, the disclosure relates to an article molded or extruded from compositions encompassed by the disclosure. In one aspect, the disclosure relates to a method of forming a composition with improved heat stability and/or processing behavior, including melt blending the components of any of the compositions encompassed by our disclosure. In another aspect, our disclosure encompasses a method of forming an article, including shaping, extruding, blow molding, or injection molding any of the compositions encompassed by our disclosure.

The copolyester elastomers can impart useful properties to articles. The copolyester elastomers, for instance, can impart one or more of the following properties to an article molded or extruded from the composition: (i) an impact resistance properties imparted by the molding composition of the disclosure is generally at least 100 joules per meter (J/m) for notched Izod at room temperature, a tensile modulus of elasticity ranging from 20 megapascals (MPa) to 1200 MPa, a glass transitions temperature of the amorphous phase ranges from -80 °C to 10 °C, a melt transition temperature ranging from 145 °C to 230 °C, a flexural modulus ranging from 20 to 1200 MPa, a hardness ranging from 25 to 80 Shore D, and a heat deflection temperature ranging from 45 °C to 200 °C. In another aspect, the copolyester elastomers can impart to an article molded or extruded from the composition a tensile modulus of elasticity ranging from 20 MPa to 1200 MPa, a melt transition temperature ranging from 145 °C to 230 °C, a hardness ranging from 25 to 80 Shore D, and a Vicat temperature ranging from 45 °C to 200 °C.

Further, the process for making our elastomers can advantageously substantially reduce carbon dioxide emissions and solid waste. Since the PET-derived modified random copolyester elastomers are made from scrap PET and not monomers, the process for making the elastomers significantly reduces the amount of carbon dioxide emissions and solid waste. Carbon waste reduction (or crude oil savings) occurs because the carbon that constitutes the dimethyl terephthalate or terephthalic acid ordinarily used to make elastomers is not used, rather a PET component, e.g., polyester scrap, is replaced. The process to make DMT or TPA from crude oil is highly energy intensive and as a result, substantial emissions of $CO_2$ to the atmosphere occur from burning of non-renewable energy sources. Additionally, when the source of BDO is derived from biomass feedstocks such as succinic acid, the carbon dioxide savings are further increased for two reasons. Bio derived succinic acid is made from sugars or other bio-derived hydrocarbons that originate from atmospheric carbon sources, thereby providing an advantage that is absent in ordinary monomer-based elastomers derived from fossil materials. Furthermore, the fermentation to yield succinic acid requires carbon dioxide as an input thus leading to further carbon dioxide reductions.

Although the disclosure has been directed to compositions including a modified, random copolyester elastomer containing the modified, random polybutylene terephthalate copolymer block and the polyalkylene oxide copolymer block, the disclosure includes aspects that include modified, random copolyester elastomer containing the modified, random polytrimethylene terephthalate copolymer block and the polyalkylene oxide copolymer block.

Also, methods for forming such compositions can include the steps of melt blending the components of any of our compositions. Articles made from such compositions are also within the scope of our disclosure.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

a copolyester elastomer comprising a polybutylene terephthalate (PBT) moiety and an elastomer moiety; and from greater than 0.1 wt% to 9 wt% of at least one brightening agent,
wherein the PBT moiety comprises PBT derived from post-consumer, pre-consumer or post-industrial recycled (PCR) polyethylene terephthalate (PET), and
wherein the thermoplastic composition has an L* color value of at least 80 as determined according to a CIELab color space standard.

Aspect 2. The thermoplastic composition according to Aspect 1, wherein the thermoplastic composition has an L* color value of at least 90 as determined according to a CIELab color space standard.

Aspect 3. The thermoplastic composition according to Aspect 1 or 2, wherein the PBT moiety is derived from PCR PET by (1) depolymerizing PCR PET to form a high purity terephthalic moiety comprising one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety.

Aspect 4. The thermoplastic composition according to Aspect 1 or 2, wherein the PBT moiety is derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT.

Aspect 5. The thermoplastic composition according to Aspect 4, wherein the BDO is derived from a petrochemical or a bio-based source.

Aspect 6. The thermoplastic composition according to any of Aspects 3 to 5, wherein the high purity terephthalic moiety or the high purity BHET monomer has a purity of at least about 95%.

Aspect 7. The thermoplastic composition according to any of Aspects 1 to 6, wherein the elastomer moiety comprises a polyalkylene oxide, a siloxane having a block length of from D5 to D400, a long chain fatty acid, or a combination thereof.

Aspect 8. The thermoplastic composition according to any of Aspects 1 to 7, wherein the elastomer moiety comprises a polyalkylene oxide comprising polytetrahydrofuran (pTHF).

Aspect 9. The thermoplastic composition according to any of Aspects 1 to 8, wherein the elastomer moiety is derived from a petrochemical or a bio-based source.

Aspect 10. The thermoplastic composition according to any of Aspects 1 to 9, wherein the at least one brightening agent comprises titanium dioxide ($TiO_2$), zinc sulfide (ZnS), or a combination thereof.

Aspect 11. The thermoplastic composition according to any of Aspects 1 to 10, wherein the composition comprises from about 2 wt% to about 9 wt% of the at least one brightening agent.

Aspect 12. The thermoplastic composition according to any of Aspects 1 to 11, wherein the composition further comprises at least one additional component comprising an additional thermoplastic polymer, a filler, an impact modifier, a pigment, a whitening agent, a surfactant, a processing aid, a thermal stabilizer, a flame retardant, a photochemical stabilizer or a combination thereof.

Aspect 13. A method for forming a copolyester elastomer, comprising:

(1) forming a PBT moiety from a high purity terephthalic moiety; and
(2) polymerizing the PBT moiety with an elastomer moiety to form the copolyester elastomer,

wherein the high purity terephthalic moiety is derived from post-consumer, pre-consumer or post-industrial recycled (PCR) polyethylene terephthalate (PET).

Aspect 14. The method according to Aspect 13, wherein the step of forming the PBT moiety from a high purity terephthalic moiety comprises (1) depolymerizing PCR PET to form a high purity terephthalic moiety comprising one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety.

Aspect 15. The method according to Aspect 13, wherein the PBT moiety is derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT.

Aspect 16. The method according to Aspect 15, wherein the BDO is derived from a petrochemical or a bio-based source.

Aspect 17. The method according to Aspect 15 or 16, wherein the high purity BHET monomer has a purity of at least about 95%.

Aspect 18. The method according to any of Aspects 13 to 17, wherein the high purity terephthalic moiety has a purity of at least about 95%.

Aspect 19. The method according to any of Aspects 13 to 18, wherein the elastomer moiety comprises a polyalkylene oxide, a siloxane having a block length of from D5 to D400, a long chain fatty acid, or a combination thereof.

Aspect 20. The method according to any of Aspects 13 to 19, wherein the elastomer moiety comprises a polyalkylene oxide comprising polytetrahydrofuran (pTHF).

Aspect 21. The method according to any of Aspects 13 to 20, wherein the elastomer moiety is derived from a petrochemical or a bio-based source.

Aspect 22. The method according to any of Aspects 13 to 21, further comprising combining the copolyester elastomer with at least one brightening agent to form a thermoplastic composition.

Aspect 23. The method according to Aspect 22, wherein the at least one brightening agent comprises titanium

dioxide ($TiO_2$), zinc sulfide (ZnS), or a combination thereof.

Aspect 24. The method according to Aspect 22 or 23, wherein the composition comprises from about 2 wt% to about 9 wt% of the at least one brightening agent.

Aspect 25. The method according to any of Aspects 22 to 24, wherein the composition has an L* color value of at least 80 as determined according to a CIELab color space standard.

Aspect 26. The method according to Aspect 25, wherein the composition has an L* color value of at least 90 as determined according to a CIELab color space standard.

Aspect 27. The method according to any of Aspects 22 to 26, wherein the composition further comprises at least one additional component comprising an additional thermoplastic polymer, a filler, an impact modifier, a pigment, a whitening agent, a surfactant, a processing aid, a thermal stabilizer, a flame retardant, a photochemical stabilizer or a combination thereof.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a copolyester elastomer comprising a polybutylene terephthalate (PBT) moiety and an elastomer moiety; and from greater than 0.1 wt% to 9 wt% of at least one brightening agent,
wherein the PBT moiety comprises PBT derived from post-consumer, pre-consumer or post-industrial recycled (PCR) polyethylene terephthalate (PET), and
wherein the thermoplastic composition has an L* color value of at least 80 as determined according to a CIELab color space standard.

**2.** The thermoplastic composition according to claim 1, wherein the thermoplastic composition has an L* color value of at least 90 as determined according to a CIELab color space standard.

**3.** The thermoplastic composition according to claim 1 or 2, wherein the PBT moiety is derived from PCR PET by (1) depolymerizing PCR PET to form a high purity terephthalic moiety comprising one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety.

**4.** The thermoplastic composition according to claim 1 or 2, wherein the PBT moiety is derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT.

**5.** The thermoplastic composition according to claim 4, wherein the BDO is derived from a petrochemical or a bio-based source.

**6.** The thermoplastic composition according to any of claims 3 to 5, wherein the high purity terephthalic moiety or the high purity BHET monomer has a purity of at least about 95%.

**7.** The thermoplastic composition according to any of claims 1 to 6, wherein the elastomer moiety comprises a polyalkylene oxide, a siloxane having a block length of from D5 to D400, a long chain fatty acid, or a combination thereof.

**8.** The thermoplastic composition according to any of claims 1 to 7, wherein the elastomer moiety comprises a polyalkylene oxide comprising polytetrahydrofuran (pTHF).

**9.** The thermoplastic composition according to any of claims 1 to 8, wherein the elastomer moiety is derived from a petrochemical or a bio-based source.

**10.** The thermoplastic composition according to any of claims 1 to 9, wherein the at least one brightening agent comprises titanium dioxide ($TiO_2$), zinc sulfide (ZnS), or a combination thereof, and wherein the composition comprises from about 2 wt% to about 9 wt% of the at least one brightening agent.

**11.** A method for forming a copolyester elastomer, comprising:

(1) forming a PBT moiety from a high purity terephthalic moiety; and
(2) polymerizing the PBT moiety with an elastomer moiety to form the copolyester elastomer,

wherein the high purity terephthalic moiety is derived from post-consumer, pre-consumer or post-industrial recycled (PCR) polyethylene terephthalate (PET).

**12.** The method according to claim 11, wherein the step of forming the PBT moiety from a high purity terephthalic moiety comprises (1) depolymerizing PCR PET to form a high purity terephthalic moiety comprising one or more of bis(2-hydroxyethyl) terephthalate (BHET), terephthalic acid (TPA), dimethyl terephthalate (DMT) or bis (2-hydroxy ethylene) terephthalamide (BHETA), and then (2) polymerizing the high purity terephthalic moiety to form the PBT moiety.

**13.** The method according to claim 12, wherein the PBT moiety is derived from PCR PET by (1) depolymerizing the PCR PET to form a high purity bis(2-hydroxyethyl) terephthalate (BHET) monomer, and then (2) polymerizing the high purity BHET monomer with butane diol (BDO) to form the PBT.

**14.** The method according to claim 13, wherein the high purity BHET monomer or the high purity terephthalic moiety has a purity of at least about 95%.

**15.** The method according to any of claims 11 to 14, wherein the elastomer moiety comprises a polyalkylene oxide, a siloxane having a block length of from D5 to D400, a long chain fatty acid, or a combination thereof.

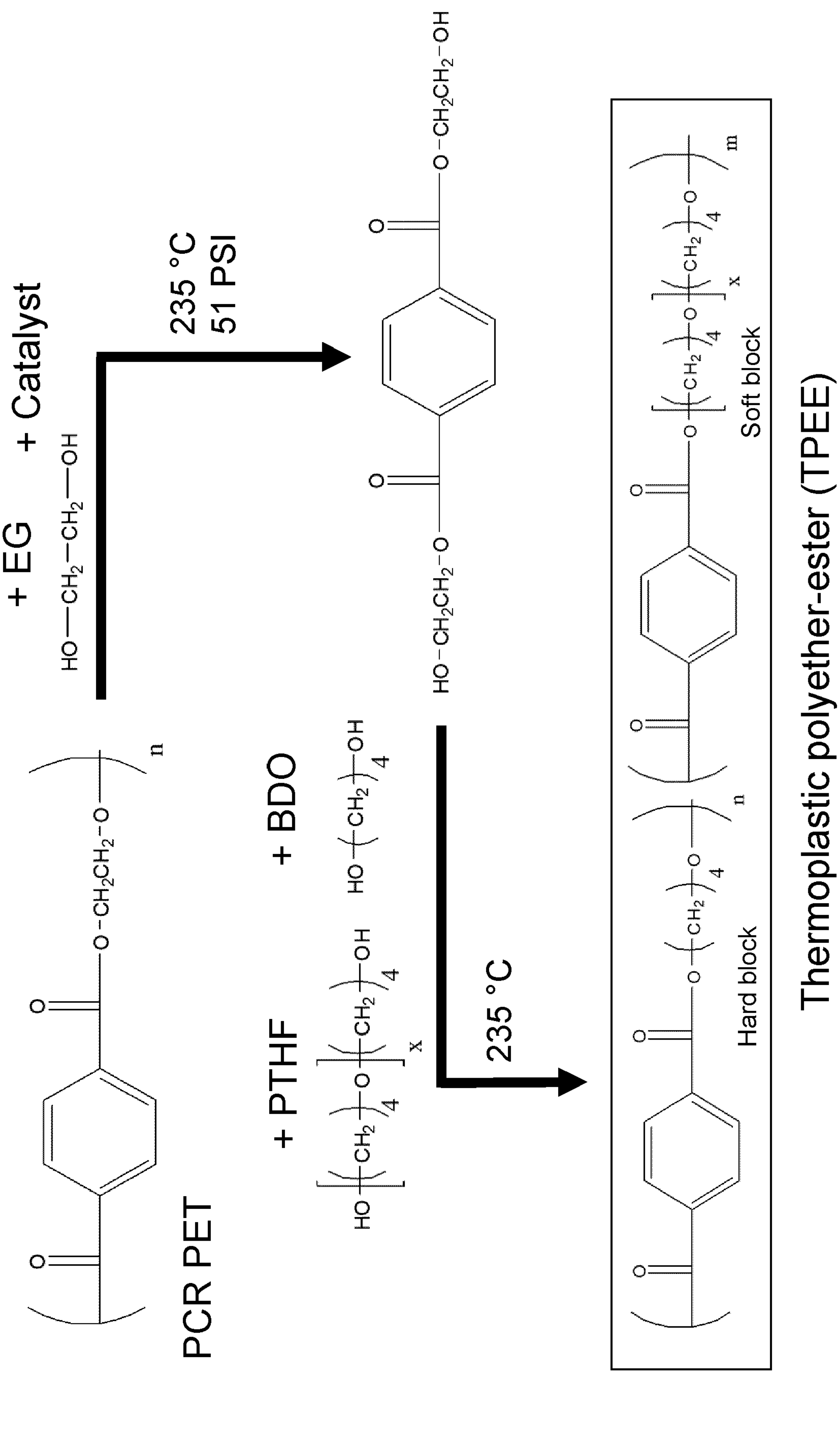
PCR PET
+ EG
+ Catalyst
235 °C
51 PSI
+ PTHF
+ BDO
235 °C
Hard block
Soft block
Thermoplastic polyether-ester (TPEE)

FIG. 1

Europäisches Patentamt
European Patent Office
Office européen des brevets

# EUROPEAN SEARCH REPORT

Application Number
EP 21 18 4114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/014254 A2 (GEN ELECTRIC [US]; VOLLENBERG PETER H [US] ET AL.) 31 January 2008 (2008-01-31) * paragraph [0096]; example 2; tables 1, 2 * | 1-15 | INV. C08K3/22 C08K3/30 C08L83/10 C08L67/08 C08L67/02 |
| Y | WO 2020/144644 A1 (SABIC GLOBAL TECHNOLOGIES BV [NL]) 16 July 2020 (2020-07-16) * example 1; table 1 * | 1-15 | ADD. C08G63/672 C08G77/445 C08G63/695 |
| A | JP H06 107922 A (TOYO BOSEKI) 19 April 1994 (1994-04-19) * example 2; tables 1, 2 * | 1-15 | C08G63/91 C08G63/48 C08G63/183 C08J11/24 |
| A | WO 2008/085397 A1 (DU PONT [US]; KURIAN JOSEPH V [US]; LIANG YUANFENG [US]) 17 July 2008 (2008-07-17) * claims 2-5; example 1 * | 1-15 | C08J11/10 C08G65/332 |
| A | US 2006/009611 A1 (HAYES RICHARD A [US]) 12 January 2006 (2006-01-12) * examples 7, 18, 98; table 8 * | 1-15 | TECHNICAL FIELDS SEARCHED (IPC) C09J C08G C08J C08K |

1 The present search report has been drawn up for all claims

| Place of search | Date of completion of the search | Examiner |
|---|---|---|
| The Hague | 23 December 2021 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 18 4114

This annex lists the patent family members relating to the patent documents cited in the above-mentioned European search report. The members are as contained in the European Patent Office EDP file on
The European Patent Office is in no way liable for these particulars which are merely given for the purpose of information.

23-12-2021

| Patent document cited in search report | Publication date | Patent family member(s) | Publication date |
|---|---|---|---|
| WO 2008014254 A2 | 31-01-2008 | EP 2043992 A2 | 08-04-2009 |
| | | US 2008023887 A1 | 31-01-2008 |
| | | WO 2008014254 A2 | 31-01-2008 |
| WO 2020144644 A1 | 16-07-2020 | CN 113474403 A | 01-10-2021 |
| | | EP 3908625 A1 | 17-11-2021 |
| | | KR 20210110844 A | 09-09-2021 |
| | | WO 2020144644 A1 | 16-07-2020 |
| JP H06107922 A | 19-04-1994 | NONE | |
| WO 2008085397 A1 | 17-07-2008 | EP 2121819 A1 | 25-11-2009 |
| | | JP 2010514895 A | 06-05-2010 |
| | | KR 20090108047 A | 14-10-2009 |
| | | WO 2008085397 A1 | 17-07-2008 |
| US 2006009611 A1 | 12-01-2006 | AU 2005265323 A1 | 26-01-2006 |
| | | CN 1980976 A | 13-06-2007 |
| | | EP 1789470 A1 | 30-05-2007 |
| | | JP 4950043 B2 | 13-06-2012 |
| | | JP 2008506020 A | 28-02-2008 |
| | | US 2006009611 A1 | 12-01-2006 |
| | | WO 2006010061 A1 | 26-01-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4096156 A


### Non-patent literature cited in the description


- **SMITH.** *Life Cycles Engineering Guidelines*